# EUROPEAN PATENT SPECIFICATION

(11) **EP 3 157 349 B1**
(45) Date of publication and mention of the grant of the patent: **11.12.2019**
(21) Application number: 15739003.0
(22) Date of filing: 15.06.2015
(51) Int. Cl.: A23G 1/00, A23G 1/54

(54) **AUTOMATED METHOD FOR MAKING A MARBLED CHOCOLATE COATING**
AUTOMATISIERTES VERFAHREN ZUR HERSTELLUNG EINES MARMORIERTEN SCHOKOLADENÜBERZUGS
PROCÉDÉ AUTOMATISÉ DE FABRICATION D'UN ENROBAGE DE CHOCOLAT MARBRÉ

(30) Priority: 18.06.2014 BE 201400466
(43) Date of publication of application: 26.04.2017
(73) Proprietor: Chocolaterie Guylian NV, 9100 Sint Niklaas (BE)
(72) Inventor: D'HOOGE, Hilde, B-9100 Sint Niklaas (BE)
(74) Representative: Brantsandpatents bvba
(86) International application number: PCT/IB2015/054511
(87) International publication number: WO 2015/193791

(56) References cited:
- EP-A1- 1 462 009
- EP-A2- 0 848 910
- GB-A- 2 405 826
- US-A- 1 865 097
- Anonymous: "GNPD - Gourmet Belgian Chocolate Assortment", , 1 December 2012 (2012-12-01), XP055168357, Retrieved from the Internet: URL:http://www.gnpd.com/sinatra/recordpage /2005445/ [retrieved on 2015-02-09]
- Anonymous: "GNPD - Seashell Chocolate Pralines", , 1 February 2009 (2009-02-01), XP055168358, Retrieved from the Internet: URL:http://www.gnpd.com/sinatra/recordpage /1092368/from_search/Qz9ly7D20h/ [retrieved on 2015-02-09]

## Description

### TECHNICAL FIELD

The invention relates to a method for making a marbled chocolate coating for chocolate confectionery, such as pralines, truffles, etc., and further relates to a chocolate confectionery and a packaging box for confectionery.

### PRIOR ART

Chocolate confectionery, such as pralines, are typically composed of a filling and a chocolate coating that surrounds the filling. In certain cases, the confectionery can be provided with a marbled chocolate coating. This is a coating with a "marble-like" appearance, in which two or more types of chocolate with a different color are combined in one coating. Like this, a marbled coating is typically made from various combinations of white chocolate, milk chocolate and/or pure dark chocolate. A confectionery provided with such coating not only ensures that the confectionery generally gets a more appealing appearance, but is also beneficial for the taste of the confectionery because of the combination of the various types of chocolate within one coating.

"GNPD - Gourmet Belgian Chocolate Assortment" and "GNPD - Seashell Chocolate Pralines" visually represent marbled chocolate pralines.

Methods for obtaining a marbling are known in the prior art. For example, US 6 267 073, US 1 865 097, EP 1 462 009, EP 0 848 910, GB 2 405 826 and WO 2013 092 503 describe such methods.

Important in marbled coatings is not only that the differently colored chocolate types beautifully merge into one another, but also that the coating is sufficiently thin so that a consumer of the confectionery gets a pleasant taste sensation, and, for example, does not have too much trouble to bite through the coating to get to the filling. Furthermore, it is also important that the coating exhibits an attractive shine, which invites to consume the confectionery and gives a good indication of the quality of the confectionery.

There is a need for an improved method for making marbled chocolate coatings for chocolate confectionery, which has all of the aforementioned properties.

The present invention aims to find a solution to at least some of the above-mentioned problems.

### SUMMARY OF THE INVENTION

The invention relates in a first aspect to an automated method for making a marbled chocolate coating of a chocolate confectionery, such as a praline, according to claim 1.

Through this method, beautiful shiny marbled chocolate coatings can be made which are sufficiently thin, and exhibit a nice transition between the different types of colored chocolate. The marbling provides an attractive color shading on the surface of the coating.

In a second aspect, the invention relates to a chocolate confectionery, such as a praline, comprising a filling and a coating which comprises the filling, according to claim 11. Again, this contributes to an appealing appearance of the confectionery, which encourages consumption.

### DESCRIPTION OF THE FIGURES

**Figure 1** illustrates a confectionery with a marbled coating according to an embodiment of the present invention.
**Figure 2** illustrates a confectionery with a marbled coating according to another embodiment of the present invention.
**Figure 3** illustrates a packaging box with confectionery goods with marbled coatings according to an embodiment of the present invention.

### DETAILED DESCRIPTION

The invention relates to an automated method for making a marbled chocolate coating. The method results in an appealing marbled glossy chocolate coating in which the differently colored chocolate types beautifully merge into one another, and in which a sufficiently thin coating is obtained, which stimulates the eating experience of the consumer of the confectionery both visually and taste-wise.

Unless defined otherwise, all terms used in the description of the invention, including technical and scientific terms, have the meaning as they are commonly understood by the person skilled in the technical field of the invention. For a better assessment of the description of the invention, the following terms are explained explicitly.

"A", "an" and "the" refer in this document to both the singular and the plural, unless the context clearly implies otherwise. For example, "a mold half" means one or more than one mold half.

The terms "comprise", "comprising", "consist of", "consisting of", "provided with", "contain", "containing", "include", "including", "encompass", " encompassing" are synonyms and are inclusive or open terms which indicate the presence of what follows, and which do not preclude or prevent the presence of other components, features, elements, members, steps, known from or described in the prior art.

Where "about" or "around" is used in this document with a measurable quantity, a parameter, a time period or moment in time, and the like, then variations are meant of +/-20% or less, preferably +/-10% or less, more preferably +/-5% or less, even more preferably +/-1% or less, and even more preferably +/-0.1% or less than and of the cited value, to the extent that such variations apply in the described invention. It should, however, be understood that the value of the quantity in which the term "about" or "around" is used, is specifically disclosed itself.

Quoting numerical intervals by endpoints includes all integers, fractions and/or real numbers between the endpoints, these endpoints included.

In no case, the dimensions, the shape or the nature and/or other properties of the confectionery or the packaging box are limitative for the present invention.

The term "chocolate" refers in the present invention to all chocolate or chocolate-like compositions with a fat phase which can be tempered and which comprises at least one cocoa or cocoa-like component in this fat phase.

The "fat phase" of the chocolate according to the present invention can comprise cocoa butter, milk fat, butter oil, and other fats that can be tempered such as cocoa butter, or mixtures of cocoa butter with these fats. By a "fat phase that can be tempered" is meant in the present invention, fats that can take several crystalline forms or polymorphs. These fats are typically processed in a tempering process.

By the term "temper", "tempering process" or "tempered" in the present invention is meant the controlled pre-crystallization of the fat phase of chocolate, necessary to produce a stable solid fat phase in the final chocolate end product. An important aspect of tempering is to create a sufficient number of stable crystal nuclei, such that under the appropriate cooling conditions, the fat phase is able to crystallize into a stable polymorphic form. Tempering plays a key role to ensure that cocoa butter or other fats of the chocolate crystallize into a stable form. Chocolate which is tempered is called "tempered chocolate", while "untempered chocolate" did not go through this process. Untempered chocolate exhibits a delayed solidification during the cooling of the chocolate which eventually leads to a bad chocolate color as well as fat bloom, i.e. the migration of the fats to the surface of the chocolate. As a result, the tempering process has an important influence on the appearance of the chocolate confectionery or coating.

By the term "marbled", "marbling" in the present invention is meant a chocolate coating comprising at least two types of chocolate with a different color in such a configuration so that they exhibit a "marble-like" appearance, i.e. the differently colored types of chocolate are partially interwoven, resulting in irregular zones of different color tones of chocolate, typical of certain types of marble.

By the term "automated" is meant a process or method which is in part or entirely controlled and carried out by machine and, hereby limiting the human input.

In a first aspect, the invention relates to an automated method for making a marbled chocolate coating of a chocolate confectionery, such as a praline, truffle, etc. In particular, the marbling occurs by the use of at least two types of chocolate of different color. Herein, first a first dose of chocolate from a first color in a first mold half is provided for forming a first half of the coating, followed by the provision of an air flow device, wherein the first dose of chocolate is subjected to an air flow from this air flow device. As a result, a part of the first dose of chocolate will be blown away from the first mold half. Subsequently, this first dose of chocolate is hardened, after which a second dose of chocolate having a color different from the first dose, is provided.

In particular, the air flow will be used with a pressure between 1 and 5 bar to the first dose of chocolate, preferably with a pressure of between 2 and 4 bar, and most preferably with a pressure of about 3 bar. Preferably, the air flow further has a temperature of between 19 and 25°C.

By blowing away a part of the first colored dose of chocolate with this pressure and temperature, it ensures that this chocolate will cover the mold more or less in certain regions. The transition from a region with more chocolate to a region with less chocolate in the mold is gradually because of this blowing effect. If, thereafter, a second dose of chocolate with a different color is provided in the mold half, this second dose will more or less be visible in the final coating depending on whether the mold is more or less covered in certain regions with the first dose of chocolate. This provides the marbled effect and pattern and leads to coatings with a nice transition between the different colored types of chocolate.

The air flow device is preferably provided with a cover plate which is placed above each mold (comprising the first dose of chocolate) prior to the blowing process. As a result, a maximum blowing power can be used without the air flow device being contaminated with blown-away chocolate. Since a maximum blowing power can be used, the first dose of chocolate can be optimally distributed over the surface of the mold. Preferably, at least 30 % of the first dose of chocolate is blown away from the mold, more preferably at least 40 %.

In a subsequent step, the mold is turned in order to drain the excess second dose chocolate. By removing excess amounts of chocolate from the mold, marbled coatings are obtained with sufficiently thin dimensions. After draining of the second dose of chocolate, the second dose of chocolate is then hardened, preferentially by cooling, such that a first coating half is formed. The thickness of the coating is important for the taste experience and sensation of the consumer when consuming the confectionery. A confectionery according to the present invention will contain a sufficiently 'crispy' coating, that is nevertheless easy to bite through, and in which the consumer immediately experiences the taste of the filling. This is important for a praline.

According to a preferred embodiment, the blown-away part of the first dose of chocolate is incorporated in one or more chambers of the air flow device, such that it cannot end up again in the mold during the blowing. The provision of such chambers has the advantage that a much higher pressure can be applied during the blowing away of the first dose of chocolate than what is known. Methods from the prior art generally use a much lower pressure, which has a direct impact on the marbling pattern which is obtained. The incorporated part is preferably recycled for re-use, which ensures an optimal use of the chocolate. More preferably, also the different doses of chocolate which are not used in the mold half, i.e. the drained second dose of chocolate, surpluses of chocolate, etc., are re-used. This is done, inter alia, by transport to the chocolate reservoirs, where the recycled chocolate is mixed up with the already present chocolate in the reservoirs, and is re-heated to an optimum temperature.

The chocolate doses used in the mold half preferably comprise fondant/dark chocolate, milk chocolate and/or white chocolate, preferentially with a temperature of between 29 and 35 °C. Preferably, the first dose of chocolate has a temperature of between 30 and 33 °C and the second dose a temperature of between 29 and 33 °C. Preferably, the temperature of the chocolate will be different depending on the type of chocolate, i.e. fondant/dark chocolate, milk chocolate or white chocolate, which is used in the mold. In this way, if the first dose of chocolate comprises white chocolate, the first dose of chocolate will preferably have a temperature of between 30.5 and 32 °C, and if the first dose of chocolate is milk chocolate, the first dose of chocolate will preferably have a temperature of between 31 and 32.5 °C. Similarly, if the second dose of chocolate comprises white chocolate, the second dose of chocolate will preferably have a temperature of between 30 and 31.5 °C, and if the second dose of chocolate is milk chocolate, the second dose of chocolate will preferably have a temperature of between 30.5 and 32 °C.

This temperature ensures that the chocolate reaches the mold in a perfectly tempered condition and leads to marbled coatings with an appealing chocolate shine. Chocolate coatings which exhibit a nice shine are important for the quality perception of the customer for the confectionery. A nice shine often indicates a fresh and qualitative product.

According to a preferred embodiment, the first coating half is further provided with a filling. The filling may comprise any filling as known by a skilled person in the technical field, such as a truffle filling, caramel filling, hazelnut praliné filling, cappuccino cream filling, fruit ganache filling, vanilla cream filling, etc., as well as any combination hereof. Furthermore, the filling may comprise additional elements such as a roasted (hazel)nut, crunchy biscuit, etc. Preferably, the filling is a filling based on hazelnuts or derivatives of hazelnuts, such as a hazelnut praliné filling. By derivatives is meant in the present invention processed hazelnuts (such as sweetened, roasted, caramelized), hazelnut particles, hazelnut paste, etc.).

In a preferred embodiment, a second coating half is formed in a second mold half, according to a method similar to the method for making the first coating half. The first and the second coating halves can then be brought together to form a chocolate confectionery. Preferably, both the first coating half and the second coating half comprise a filling. More preferably, both coating halves are made simultaneously on one automated production line. Putting the two coating halves together may be done by various methods as known by a skilled person in the technical field, for example by the provision of a small quantity of liquid chocolate as "glue" for the two coating halves or by locally heating the edge of the first and/or second coating half, as a result of which a small part becomes liquid again and in this way, putting both halves together will be simplified.

The marbled chocolate coating made through a method according to the present invention preferably comprises between 20 and 35 % of the first dose of chocolate and between 65 and 80 % of the second dose of chocolate. More preferably, the coating comprises between 24 and 34 % of the first dose of chocolate and between 66 and 76 % of the second chocolate. Most preferably, the coating comprises about 29 % of the first dose of chocolate and about 71 % of the second dose of chocolate. In a second aspect, the invention relates to a chocolate confectionery, such as pralines, truffles, chocolate bonbons, comprising a filling and a coating which comprises the filling, wherein the coating is provided with a marbling obtained by the use of at least two types of chocolate of different color by means of an automated method according to the present invention. The visible surface of the coating of the confectionery consists for at least 60% of a first type of chocolate. The chocolate coating has a thickness of between 0.1 and 2 mm.

The filling can be any filling, such as known by a skilled person in the technical field. Preferably, the filling comprises a sweetener. Sweeteners may comprise saccharides, such as, for example, sucrose, glucose, fructose, polydextrose, powdered sugar, or combinations thereof, as well as polyols such as, for example, sorbitol, mannitol, maltitol, isomalt, xylitol or erythritol. Preferably, the sweetener is sugar. In a preferred embodiment, the filling is a filling on the basis of hazelnuts or derivatives of hazelnuts.

The shape of the confectionery may comprise any shape. Preferably, the confectionery is essentially beam or cylindrical shaped. In another preferred embodiment, the confectionery has the shape of a sea horse (*Hippocampus*) or sea shellfish. Examples of sea shellfish are oysters (*Ostrea*), harpshells (*Harpa harpa*), wentletrap (*Mesalia brevialis*) Sunrise shell (*Tellina radiata*), shrimp (*Crusta*), bivalves (*Hippopus hippopus,* Mytilus) and cockles (*Cerastoderma*).

A packaging box, comprising at least one confectionery with a marbled chocolate coating that is made according to an automated method as described by the present invention, is also described herein.

The packaging box comprises a cardboard casing, comprising a recess suitable for receiving a plastic support platform, and a cover for closing the packaging box, wherein the support platform is provided with at least one compartment, suitable for receiving at least one confectionery characterized in that the compartment has a shape in accordance with the confectionery.

Preferably, the cover is provided with a see-through window which allows to see the chocolate confectionery in the packaging box.

The cardboard casing is preferably made up of 4 upright cardboard walls, which are laterally connected to one another, and a cardboard bottom connected to the 4 upright cardboard walls, such that a beam is formed of which the top is open, i.e. which does not have a top surface, as a result of which a recess is created in which the plastic support platform fits. The 4 upright cardboard walls are double walls which consist of 2 dividing walls which are positioned parallel to one another and which at the top are connected to one another with a contact surface which orientates perpendicularly with respect to the dividing walls.

Preferably, means are provided on the cover to reversibly close the cardboard casing comprising the support platform. This may, for example, a pull-tab attached to the cover which fits into a recess on a side wall of the cardboard casing.

In what follows, the invention is described by means of non-limiting examples which illustrate the invention, and which are not intended or should be interpreted to limit the scope of the invention.

### EXAMPLES

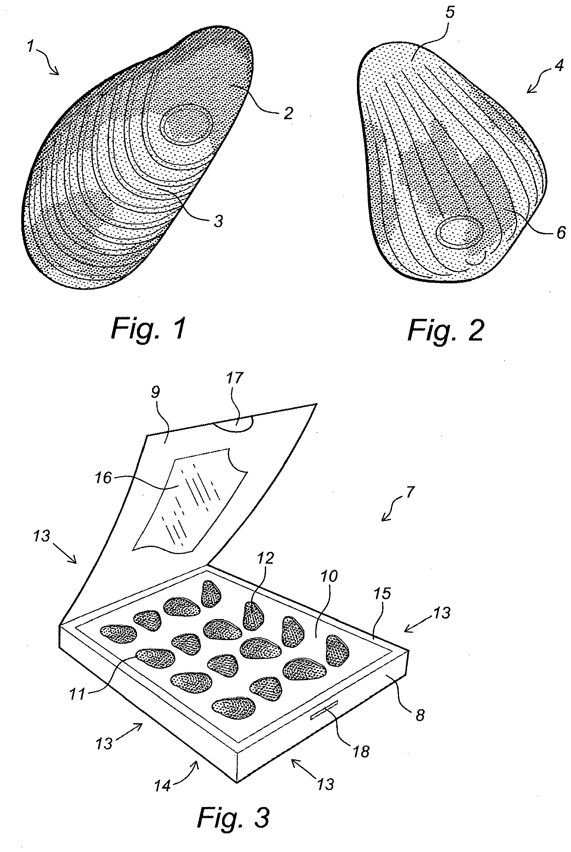

Figure 1 shows an embodiment of a chocolate confectionery having a marbled coating (1) made according to a method of the present invention, wherein milk chocolate (2) was used as a first dose of chocolate and white chocolate (3) as a second dose of chocolate.

Figure 2 shows another embodiment of a chocolate confectionery having a marbled coating (4) according to a method of the present invention, wherein white chocolate (5) was used as a first dose of chocolate and dark chocolate (6) was used as a second dose of chocolate.

Figure 3 shows a perspective drawing of a packaging box (7) comprising chocolate confectionery goods with marbled coatings (12). The packaging box comprises a cardboard casing (8), which is made up of 4 upright cardboard walls (13), which are laterally connected to one another, and a cardboard bottom (14) connected to the 4 upright cardboard walls at its bottom edge, such that a beam is formed of which the top is open, i.e. that does not have a top surface, through which a recess is created. A plastic support platform (10) fits in this recess. At one of the four walls, at its upper edge, a rectangular cover (9) is connected which is capable to reversibly close off the cardboard casing with the plastic platform. Each of the 4 upright cardboard walls (13) is composed of 2 dividing walls (not visible) which are positioned parallel to one another and which at the upper edge are connected to one another with a contact surface (15) which is orientated perpendicularly with respect to the 2 dividing walls . The plastic support platform is provided with compartments (11) which have a shape in accordance with the marbled confectionery goods (12), in order to receive the confectionery goods.

The cover (9) is provided with a see-through window (16) that is transparent and allows to see the chocolate confectionery in the packaging box when the cover closes off the cardboard casing.

On the opposite side of the side of the cover connected to the wall of the cardboard casing, a tab (17) is provided, substantially in the middle of these opposite side. This tab fits in a recess (18) provided on a wall (13) of the cardboard casing, more particularly the wall opposite from the wall to which the cover is connected. This allows that the cover can reversibly close off the cardboard casing with the plastic platform.

## Claims

1. Automated method for making a marbled chocolate coating of a chocolate confectionery, such as a praline, wherein the marbling occurs by the use of at least two types of chocolate of different color, which method comprises the following sequential steps:
a. providing a first dose of chocolate of a first color in a first mold half suitable for forming a first half of the coating;
b. providing an air flow device;
c. subjecting said first dose of chocolate to an air flow in which a part of the first dose of chocolate is blown away from the first mold half;
d. letting the aforementioned first dose of chocolate harden;
e. providing aforementioned first mold half with a second dose of chocolate, with a color different from the first dose;
f. turning the mold in order to drain the excess second dose of chocolate;
g. letting the aforementioned second dose of chocolate harden, resulting in a first coating half
**characterized in that** the aforementioned air flow is used with a pressure between 1 and 5 bar on aforementioned said first dose of chocolate.

2. Automated method according to claim 1, **characterized in that** the air flow has a temperature of between 19 and 25 °C.

3. Automated method according to any one of the preceding claims 1 or 2, **characterized in that** the blown-away part of the first dose of chocolate is incorporated in one or more chambers of the air flow device.

4. Automated method according to claim 3, **characterized in that** the incorporated blown-away part is at least partially recycled for further use.

5. Automated method according to any one of the preceding claims 1-4, wherein said first dose of chocolate and/or aforementioned second dose of chocolate comprises fondant/dark chocolate, milk chocolate and/or white chocolate.

6. Automated method according to any one of the preceding claims 1-5, wherein said first dose of chocolate and/or aforementioned second dose of chocolate has a temperature of between 29 and 35 °C.

7. Automated method according to any one of the preceding claims 1-6, wherein aforementioned first dose and/or aforementioned second dose of chocolate which is not used in the first mold half, is at least partly re-used.

8. Automated method according to any one of the preceding claims 1-7, **characterized in that** the first coating half is provided with a filling, preferably a filling on the basis of hazelnuts.

9. Automated method according to any one of the preceding claims 1-8, **characterized in that** a second coating half is formed in a second mold half, according to a method similar to the method of the preceding claims, **characterized in that** the first and second coating halves are brought together to form at least one confectionery.

10. Automated method according to any one of the preceding claims 1-9, wherein the chocolate coating comprises between 20 and 35 % of the first dose of chocolate and comprises between 65 and 80 % of the second dose of chocolate.

11. A praline, comprising first coating half and a second coating half, each comprising a filling, wherein said halves are brought together and said coating has a thickness of between 0.1 and 2 mm, wherein the coating comprises at least two types of chocolate of different color, said coating is provided with a marbling effect of said chocolate types, **characterized in that** said marbling effect is obtained by means of an automated method according to any one of the preceding claims 1-10, and wherein the coating comprises between 20 % and 35 % of a first dose of chocolate and between 65 % and 80 % of a second dose of chocolate and wherein the visual surface of the coating consists for at least 60 % of the first dose of chocolate of the first color.

## Patentansprüche

1. Automatisiertes Verfahren zur Herstellung eines marmorierten Überzugs für ein Schokoladenkonfekt, wie etwa eine Praline, wobei das Marmorieren durch die Verwendung von mindestens zwei verschiedenfarbigen Schokoladenarten erfolgt, wobei das Verfahren die folgenden aufeinanderfolgenden Schritte umfasst:
a. Bereitstellen einer ersten Portion Schokolade mit einer ersten Farbe in einer ersten Formwerkzeughälfte, die dazu geeignet ist, eine erste Hälfte des Überzugs zu bilden,
b. Bereitstellen eines Luftstromgerätes,
c. Aussetzen der ersten Portion Schokolade einem ersten Luftstrom, wobei ein Teil der ersten Portion Schokolade von der ersten Formwerkzeughälfte weggeblasen wird,
d. Aushärtenlassen der ersten Portion Schokolade,
e. Versehen der ersten Formwerkzeughälfte mit einer zweiten Portion Schokolade mit einer Farbe, die sich von der ersten Portion unterscheidet,
f. Drehen des Formwerkzeugs, um die überschüssige zweite Portion Schokolade abfließen zu lassen,
g. Aushärtenlassen der zweiten Portion Schokolade, was zu einer ersten Überzugshälfte führt,
**dadurch gekennzeichnet, dass** der Luftstrom mit einem Druck zwischen 1 und 5 bar an der ersten Portion Schokolade verwendet wird.

2. Automatisiertes Verfahren nach Anspruch 1, **dadurch gekennzeichnet, dass** der Luftstrom eine Temperatur zwischen 19 und 25 °C aufweist.

3. Automatisiertes Verfahren nach einem der vorhergehenden Ansprüche 1 oder 2, **dadurch gekennzeichnet, dass** der weggeblasene Teil der ersten Portion Schokolade in einer oder mehreren Kammern des Luftstromgeräts aufgenommen wird.

4. Automatisiertes Verfahren nach Anspruch 3, **dadurch gekennzeichnet, dass** der aufgenommene weggeblasene Teil zumindest teilweise für eine weitere Verwendung rückgewonnen wird.

5. Automatisiertes Verfahren nach einem der vorhergehenden Ansprüche 1 bis 4, wobei die erste Portion Schokolade und/oder die zweite Portion Schokolade Fondant/ dunkle Schokolade, Milchschokolade und/oder weiße Schokolade umfassen.

6. Automatisiertes Verfahren nach einem der vorhergehenden Ansprüche 1 bis 5, wobei die erste Portion Schokolade und/oder die zweite Portion Schokolade eine Temperatur zwischen 29 und 35 °C aufweisen/aufweist.

7. Automatisiertes Verfahren nach einem der vorhergehenden Ansprüche 1 bis 6, wobei die erste Portion und/oder die zweite Portion Schokolade, die nicht in der ersten Formwerkzeughälfte verwendet wird, zumindest teilweise wiederverwendet werden/wird.

8. Automatisiertes Verfahren nach einem der vorhergehenden Ansprüche 1 bis 7, **dadurch gekennzeichnet, dass** die erste Überzugshälfte mit einer Füllung versehen wird, vorzugsweise mit einer Füllung auf der Grundlage von Haselnüssen.

9. Automatisiertes Verfahren nach einem der vorhergehenden Ansprüche 1 bis 8, **dadurch gekennzeichnet, dass** gemäß einem Verfahren, das ähnlich dem Verfahren der vorhergehenden Ansprüche ist, in einer zweiten Formwerkzeughälfte eine zweite Überzughälfte gebildet wird, **dadurch gekennzeichnet, dass** die erste und die zweite Überzughälfte zusammengebracht werden, um mindestens ein Konfekt zu bilden.

10. Automatisiertes Verfahren nach einem der vorhergehenden Ansprüche 1 bis 9, wobei der Schokoladenüberzug zwischen 20 und 35 % der ersten Portion Schokolade umfasst und zwischen 65 und 80 % der zweiten Portion Schokolade umfasst.

11. Praline, eine erste Überzughälfte und eine zweite Überzughälfte, die jeweils eine Füllung umfassen, umfassend, wobei die Hälften zusammengebracht sind und der Überzug eine Dicke zwischen 0,1 und 2 mm aufweist, wobei der Überzug mindestens zwei verschiedenfarbige Schokoladenarten umfasst, wobei der Überzug mit einer Marmorierungswirkung der Schokoladenarten versehen ist, **dadurch gekennzeichnet, dass** die Marmorierungswirkung mit Hilfe eines automatisierten Verfahrens nach einem der Ansprüche 1 bis 10 erzielt wird und wobei der Überzug zwischen 20 % und 35 % einer ersten Portion Schokolade und zwischen 65 % und 80 % einer zweiten Portion Schokolade umfasst und wobei die sichtbare Oberfläche des Überzugs aus mindestens 60 % der ersten Portion Schokolade der ersten Farbe besteht.

## Revendications

1. Procédé automatisé de fabrication d'un enrobage de chocolat marbré d'une confiserie de chocolat, comme une praline, dans lequel la marbrure se produit par l'utilisation d'au moins deux types de chocolat de couleur différente, lequel procédé comprend les étapes successives suivantes :
a. fournir une première dose de chocolat d'une première couleur dans une première moitié de moule apte à former une première moitié de l'enrobage ;
b. fournir un dispositif de flux d'air ;
c. soumettre ladite première dose de chocolat à un flux d'air dans lequel une partie de la première dose de chocolat est soufflée hors de la première moitié de moule ;
d. laisser la première dose de chocolat précitée durcir;
e. munir la première moitié de moule précitée d'une seconde dose de chocolat, avec une couleur différente de la première dose ;
f. tourner le moule pour éliminer l'excédent de seconde dose de chocolat;
g. laisser la seconde dose de chocolat précitée durcir, résultant en une première moitié d'enrobage,
**caractérisé en ce que** le flux d'air précité est utilisé avec une pression comprise entre 1 et 5 bars sur ladite première dose de chocolat précitée.

2. Procédé automatisé selon la revendication 1, **caractérisé en ce que** le flux d'air a une température comprise entre 19 et 25 °C.

3. Procédé automatisé selon l'une quelconque des revendications précédentes 1 ou 2, **caractérisé en ce que** la partie soufflée de la première dose de chocolat est incorporée dans une ou plusieurs chambres du dispositif de flux d'air.

4. Procédé automatisé selon la revendication 3, **caractérisé en ce que** la partie soufflée incorporée est au moins partiellement recyclée pour une utilisation ultérieure.

5. Procédé automatisé selon l'une quelconque des revendications précédentes 1 à 4, dans lequel ladite première dose de chocolat et/ou seconde dose de chocolat précitée comprend du chocolat noir/fondant, du chocolat au lait et/ou du chocolat blanc.

6. Procédé automatisé selon l'une quelconque des revendications précédentes 1 à 5, dans lequel ladite première dose de chocolat et/ou seconde dose de chocolat précitée a une température comprise entre 29 et 35 °C.

7. Procédé automatisé selon l'une quelconque des revendications précédentes 1 à 6, dans lequel la première dose précitée et/ou la seconde dose précitée de chocolat qui n'est pas utilisée dans la première moitié de moule, est au moins partiellement réutilisée.

8. Procédé automatisé selon l'une quelconque des revendications précédentes 1 à 7, **caractérisé en ce que** la première moitié d'enrobage est pourvue d'une garniture, de préférence une garniture à base de noisettes.

9. Procédé automatisé selon l'une quelconque des revendications précédentes 1 à 8, **caractérisé en ce qu** 'une seconde moitié d'enrobage est formée dans une seconde moitié de moule, selon un procédé similaire au procédé des revendications précédentes, **caractérisé en ce que** les première et seconde moitiés d'enrobage sont réunies pour former au moins une confiserie.

10. Procédé automatisé selon l'une quelconque des revendications précédentes 1 à 9, dans lequel l'enrobage de chocolat comprend entre 20 et 35 % de la première dose de chocolat et comprend entre 65 et 80 % de la seconde dose de chocolat.

11. Praline, comprenant une première moitié d'enrobage et une seconde moitié d'enrobage, comprenant chacune une garniture, dans laquelle lesdites moitiés sont réunies et ledit enrobage a une épaisseur comprise entre 0,1 et 2 mm, dans lequel l'enrobage comprend au moins deux types de chocolat de couleur différente, ledit enrobage est muni d'un effet de marbrure desdits types de chocolat, **caractérisée en ce que** ledit effet de marbrure est obtenu au moyen d'un procédé automatisé selon l'une quelconque des revendications précédentes 1 à 10, et dans lequel l'enrobage comprend entre 20 % et 35 % d'une première dose de chocolat et entre 65 % et 80 % d'une seconde dose de chocolat, et dans lequel la surface visuelle de l'enrobage est constituée pour au moins 60 % de la première dose de chocolat de la première couleur.
